# EUROPEAN PATENT APPLICATION

(11) **EP 1 798 928 A1**
(43) Date of publication of application: **20.06.2007**
(21) Application number: 05292730.8
(22) Date of filing: 16.12.2005
(51) Int. Cl.: H04L 29/06, H04N 7/24

(54) **A packet based media delivery system with community channel manager**

(71) Applicant: Alcatel Lucent, 75008 Paris (FR)
(72) Inventor: Handekyn, Koen, 9080 Lochristi (BE); Hemmeryckx-Deleersnijder, Bart Karel, 3001 Heverlee (BE); Krutous, Serge, c/o Alcatel ZAO, 193019 St. Petersburg (RU); Sokolov, Vasily, c/o Alcatel ZAO, 193019 St. Petersburg (RU)
(74) Representative: Narmon, Gisèle Marie Thérèse

(57) **Abstract**

A packet based media delivery system (201) has a media store for media assets, and a channel manager enabling packet based delivery of the media assets through broadcast channels and/or on-demand channels to end users (204). According to the invention, the packet based media delivery system (201) further has a community media store (203) for end user originating media assets, and a community channel manager (202) enabling end users (204) to create a community channel. The community channel has a number of linked end users, and enables packet based delivery of the user originating media assets to the linked end users only.

## Description

### Field of the Invention

The present invention generally relates to packet based media delivery systems, such as IPTV infrastructure used to deliver TV and/or video content through Internet Protocol (IP) based broadcast channels or on-demand channels. Packet or data packet in the context of this patent application means any set of bits/bytes transmitted as a group, typically having an overhead and payload section. It includes fixed length and variable length packets. The invention generally tackles the problem of delivering user originating media assets through such a packet based media delivery platform.

### Background of the Invention

An existing platform for the delivery of TV and video assets through broadband IP network is the Integrated IPTV Solution from Alcatel and Microsoft, advertised at the following Internet URL:
http://download.microsoft.com/download/1/0/3/103bae29-c839-4bd9-89e0-8969514b3713/Microsoft_Alcatel%20brochure.pdf

This platform includes the management software to stream television content through a number of broadcast channels to the end users, as well as to stream on-demand video content from a video-on-demand store to the end users through on-demand channels. The TV or video content that can be viewed is advertised via an Electronic Program Guide (EPG) that further enables the end users to select video assets he/she desires to view and to program electronic recording of video assets. It is however not possible for the end users of Alcatel and Microsoft's Integrated IPTV Solution to publish or control content that is delivered through the broadcast channels or on-demand channels. Neither can end users create channels (broadcast or classical TV channels or on-demand channels) to make them available to a community of selected end users (the community members).

It is an objective of the current invention to disclose a packet based media delivery system that does not have the above described limitations of existing platforms, i.e. which does enable the end users to publish end user originating media content, and to create and manage channels for delivery of such end user originating media content to a community of selected end users.

### Summary of the Invention

According to the current invention, the drawbacks of the existing media delivery platforms are overcome and the above defined objectives are realised through a packet based media delivery system comprising:
a. a media store for storing media assets;
b. a channel manager for managing the delivery of packets containing the media assets through broadcast channels and/or on-demand channels to end users;
c. a community media store for storing end user originating media assets; and
d. a community channel manager for enabling end users to create a community channel having a number of linked end users, and for managing the delivery of packets containing the user originating media assets through the community channel to the linked end users.

Thus, a community channel manager in the media delivery platform enables an end user to create a community channel, to link other end users to the community channel thereby creating a community of end users, and to add media assets to a media vault that can be accessed by all end users of the community. The media vault or community media store can be a centralised or distributed database for media storage. The community media store may or may not be integrated with the media store that keeps the media assets that are not originating from the end users but are made available by for instance a TV service provider. Management of the community channel in the context of the current patent application entails one or more of the following activities: creating, deleting or changing the nature of the community channel; inviting, adding, removing end users from a community; uploading, publishing, editing and changing the state of end user originating media assets and/or the related metadata (metadata are data about the media assets such as tags associated with the contents of the media assets, e.g. the title, author, mood (which can be any tag, free to the choice of the user or owner) ..., or data about the community channel itself such as the nature or type of the community channel, e.g. on-demand or broadcast).

The present invention in addition relates to a community media store for use in the packet based media delivery system as defined by claim 16, a community channel manager for use in the packet based media delivery system as defined by claim 17, and a method for packet based media delivery as defined by claim 18.

An implementation feature of the packet based media delivery system according to the current invention is that a linked user of the community channel may be registered either as an owner, a publisher or a subscriber of the community channel, as defined by claim 2.

Thus, an end user linked to a community channel may have different roles, and depending on its role, the end user may or may not be able to perform certain activities in relation to the community channel.

An optional feature of the packet based media delivery system according to the current invention is for instance that an end user that is the owner of a community channel may be able to create and delete the community channel, to invite, add and remove other linked users to the community channel, and to manage media assets and metadata belonging to the community channel. This feature is defined by claim 3.

This way, the owner of the community channel is granted the ability to perform all possible activities on the community channel.

Another optional feature of the packet based media delivery system according to the current invention is for instance that an end user that is a publisher of the community channel is enabled to upload media assets into the community channel store and to manage its own media assets. This feature is defined by claim 4.

This way, a publisher of the community channel is granted the ability to perform a subset of activities in relation to its own media assets that are published through that community channel.

Yet another optional feature of the packet based delivery system according to the current invention is that an end user that is a subscriber of the community channel is enabled to access media assets belonging to the community channel. This feature is defined by claim 5.

This way, a subscriber of the community channel is only granted the ability to access contents of the community channel.

A further implementation feature of the packet based delivery system according to the present invention, defined by claim 6, is that a media asset belonging to the community channel may have different states: a first state of availability in a broadcast carrousel, a second state of availability in an on-demand carrousel, and a third state of availability in an on demand store.

Thus, the content made available by the end users to be published through the community channel can have one or more states that influence the way wherein the content will be made available to the end users linked to the community channel.

An optional feature of the packet based delivery system according to the current invention is that the community channel manager has a broadcast channel generator that generates an instance of a broadcast channel accessible to the linked end users. On the broadcast channel, a carrousel of media assets belonging to the community channel and having said first state is repetitively broadcasted as defined by claim 7 (or narrowcasted towards only the subscribed users, or unicasted).

Thus, the media assets uploaded in the community channel that have the status "availability in a broadcast carrousel" will be aggregated and repetitively broadcasted on the community channel that is accessible to all linked end users.

A further optional feature defined in claim 8 is that the carrousel of media assets may be updated at regular time intervals.

If for instance the media assets (or each individual media asset) can be marked as expired, the community channel manager will verify at regular time intervals, e.g. once a day, what content has expired and the content related to the community channel will be replaced at those instances with the new aggregated content source.

Another optional feature of the packet based delivery system according to the current invention is that the community channel manager has an on demand channel that generates an instance of an on demand channel. This on demand channel is used to deliver a carrousel of media assets belonging to the community channel and having the second state, as defined by claim 9.

Thus, the media assets uploaded in the community channel that have the status "availability in an on demand carrousel" will be aggregated and repetitively broadcasted (unicasted) on the on demand community channel that is accessible to all linked end users upon request.

A further optional feature defined in claim 10 is that the carrousel of media assets may be updated at regular, configurable or non-configurable, time intervals.

Again, if for instance the media assets can be marked as expired, the community channel manager will verify at regular time intervals, e.g. once a day, what content has expired and the content related to the on demand community channel will be replaced at those instances with the new aggregated content source.

Yet another optional feature of the packet based delivery system according to the current invention is that the community channel manager has an on demand store generator for creating standalone offerings for respective media assets belonging to the community channel and having the third state. The on demand store is used for delivering a standalone offering of a media asset through an instance of an on demand channel on request of a linked end user, as defined by claim 11.

Thus, the media assets uploaded in the community channel that have the status "availability in an on demand store" will be converted in standalone offerings that are made available for instance under a category in the on demand store portal or page or menu that is related to the community channel. The offering can further be listed under an Electronic Program Guide entry (just like an on demand carrousel can be listed in the Electronic Program Guide) Also such media assets, e.g. video clips, can be marked with an expiration date, upon expiry of which the media asset is removed from the on demand store. Upon expiry of the expiration date, a trigger may be sent to the channel generators such that new content resources are aggregated if needed. It is remarked that typically, the content of an on demand store will have a longer life time than the content of a broadcast carrousel or an on demand carrousel because the on demand store is better browsable through time.

As defined by claims 12, 13 and 14, the media assets optionally may comprise video assets, audio assets, interactive multimedia assets such as games, etc. It is evident that applicability of the current invention is not restricted to any particular type of media asset.

Yet another implementation feature of the packet based media delivery system according to the present invention is that the media store and the community media store may be integrated in a single database, as for instance defined by claim 15.

### Brief Description of the Drawings

Fig. 1 illustrates the creation of a community video channel in an embodiment of the packet based media delivery system according to the present invention;
Fig. 2 illustrates the storing of user originating video assets in the embodiment of the packet based media delivery system of Fig. 1;
Fig. 3a is a calendar illustrating delivery of user originating video assets through a community channel in the embodiment of a packet based media delivery system of Fig. 1;
Fig. 3b illustrates the contents of a community video store in the system of Fig. 3a;
Fig. 3c illustrates the contents of a video asset carrousel delivered through a broadcast community channel in the system of Fig. 3a at time instant 321; and
Fig. 3d illustrates the contents of a video asset carrousel delivered through a broadcast community channel in the system of Fig. 3a at time instant 322.

### Detailed Description of Embodiment(s)

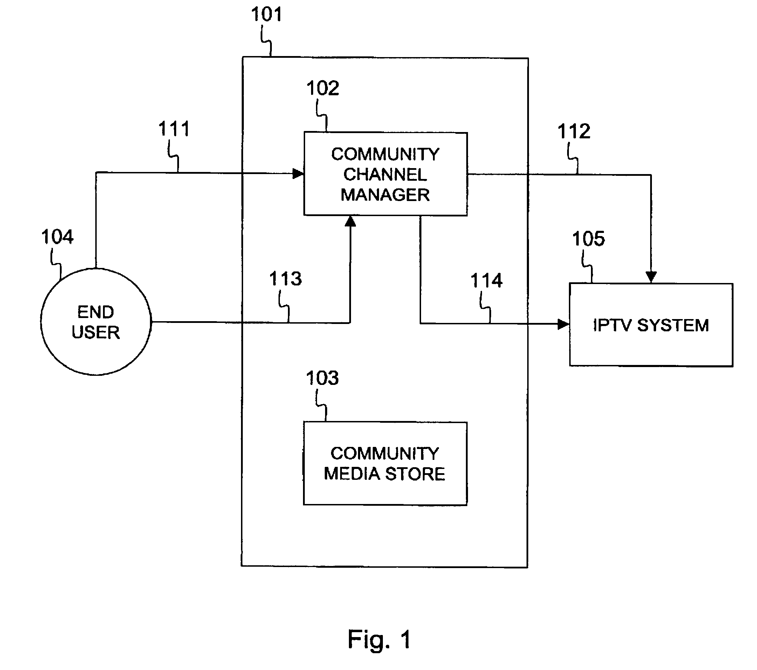

Fig. 1 shows an IP (Internet Protocol) based video delivery system 101 that is a particular instance of the packet based media delivery system according to the present invention. The traditional video store and video channel manager of the system 101 are not shown in Fig. 1. Fig. 1 however shows the community video store 103 and the community channel manager 102 that form part of the system 101 and that are core to the current invention.

As is illustrated by step 111 in Fig. 1, an end user 104 instructs the community channel manager 102 to create a community channel by defining for instance one or more of the following parameters: the full name of the community channel, the short name of the community channel, and community channel related metadata like for instance the type or nature of the community channel. The type or nature of the community channel can for instance be a combination of a broadcast channel, a VoD channel and/or a VoD store, depending on the capabilities of the IPTV system 105. In the next step, i.e. step 112 in Fig. 1, the community channel is mapped into the IPTV system 105 by the community channel manager 102. This is done for example through the channel management subsystem of the. IPTV platform 105. Thereupon, the end user 104 creates a community by linking a number of users to the just created community channel. This is illustrated by step 113 in Fig. 1 where the end user 104 informs the community channel manager 102 on the linked end users. Lastly, in step 114 the end users linked to the community channel are granted access rights to the community channel delivered through the IPTV system 105. This may be done for example through the subscriber management subsystem of the IPTV platform 105. These access rights may be different for various users linked to the community channel depending on their respective roles, as will be explained below.

The users that are linked to the community channel indeed can have several roles, and depending on their respective roles, the linked users can or cannot perform certain activities in relation to the community channel. A linked user for instance can be the owner of the community channel (which will be the case for end user 104 that created the community channel), other users can be publishers to the community channel or subscribers to the community channel. The owner of the community channel might be enabled to perform all activities in relation to the community channel: create and delete the community channel, edit the metadata related to the community channel, invite users, add users and remove users to and from the community channel and assign roles to such users, upload and manage user-originating video assets and metadata related to such video assets. Management of video assets related to the community channel can be adding or uploading a user originating video asset in the community media store 103, publishing a video asset on the community channel, editing metadata related to a video asset, changing the status of a video asset (e.g. setting or changing the expiration date of a video asset). Publishers of the community channel may be enabled to upload video assets and to manage its own video assets and related metadata. A video asset can be any kind of TV, video or even interactive multimedia content that can be delivered through the IPTV infrastructure 105. Metadata related to a video asset may for instance include the name or title of the video asset, a short description of the video asset, the status of the video asset, the recording date of the video asset, the publication date of the video asset on the community channel, the expiration date of a video asset on the community channel, the publisher identity, a rating, etc. The status of a video asset may for instance be a combination of one or more of "available in a broadcast carrousel", "available in an on-demand carrousel", and "available in a video store" if it is assumed that the community channel can be delivered through the broadcast infrastructure of the IPTV system 105, the VoD channel infrastructure of the IPTV system 105, and the VoD store of the IPTV system 105. Lastly, subscribers to the community channel may be enabled to view the video assets delivered through the community channel.

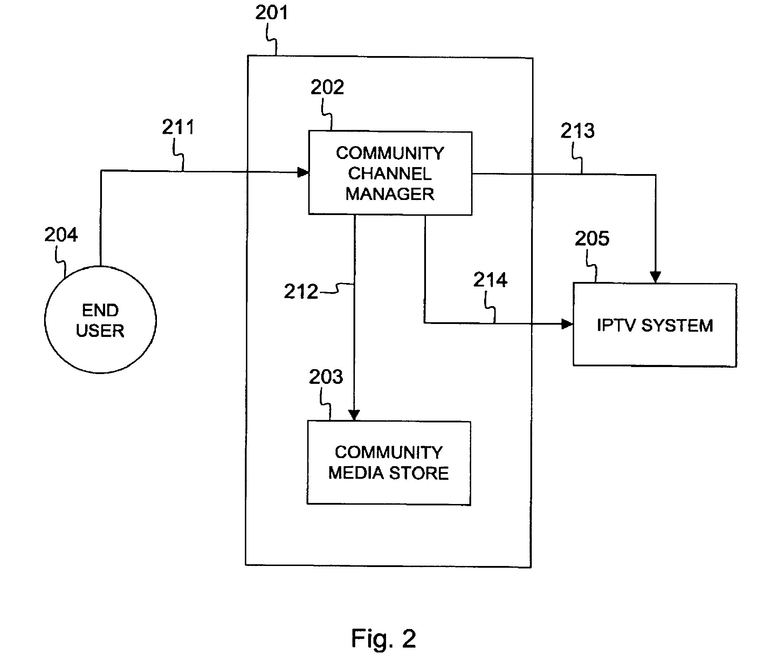

In Fig. 2, the process is illustrated for uploading a video asset from an end user 204 that has been assigned the role of publisher into the video delivery system 201 which corresponds to the video delivery system 101 of Fig. 1. Again, the traditional video store and traditional video channel manager are not shown. Only the community video store 203 and the community channel manager 202, respectively corresponding to 103 and 102 in Fig. 1, are drawn in Fig. 2. IPTV system 205 corresponds to IPTV system 105 in Fig. 1. In the first step, i.e. 211 in Fig. 2, the end user 204 uploads a video asset into the community channel manager 202, which verifies the access rights of the end user 204 and forwards the video asset to the community video store 203 in step 212. Thus, all video assets related to the community channel are maintained in a central or distributed community video store 203 (eventually integrated with the traditional video store that keeps non-user originating video assets). The assets contained in the community video store 203 may be owned and managed by any user granted such rights by the community. The community channel manager 202 further re-encodes (if needed) the content of the uploaded video asset and forwards the encoded video asset to IPTV system 205 in step 213. Lastly, in step 214, the community channel manager 202 optionally informs the IPTV system 205 on the access rights that the users have to the uploaded video asset.

Uploading and publishing of new video assets or expiration of video assets currently delivered through the community channel will trigger the community channel generator that forms part of the community channel manager, i.e. 202 in Fig. 2 or 102 in Fig. 1, to republish the community channel content and to update the IPTV platform with the new content.

One possible instance of the community channel generator is a broadcast channel generator or live channel generator. Such a live channel generator delivers the community channel through the live broadcast infrastructure of the IPTV system 205. The broadcast channel generator thereto takes all video assets that are linked to the community channel and stored in the community video store 203 with as status "available in a broadcast carrousel" and with an expiry date that has not yet lapsed. At regular time intervals, e.g. once a day at 12:00 AM, the broadcast channel generator aggregates all such video assets into a new content source and replaces the current content linked to the community channel and published through the broadcast community channel with the new aggregated content source. The new aggregated content source will be broadcasted repetitively, as a carrousel of video assets, on the broadcast community channel until the next update takes place. The broadcast community channel will be available at all times to all the end-users that are linked to the community channel and have access rights to view the channel.

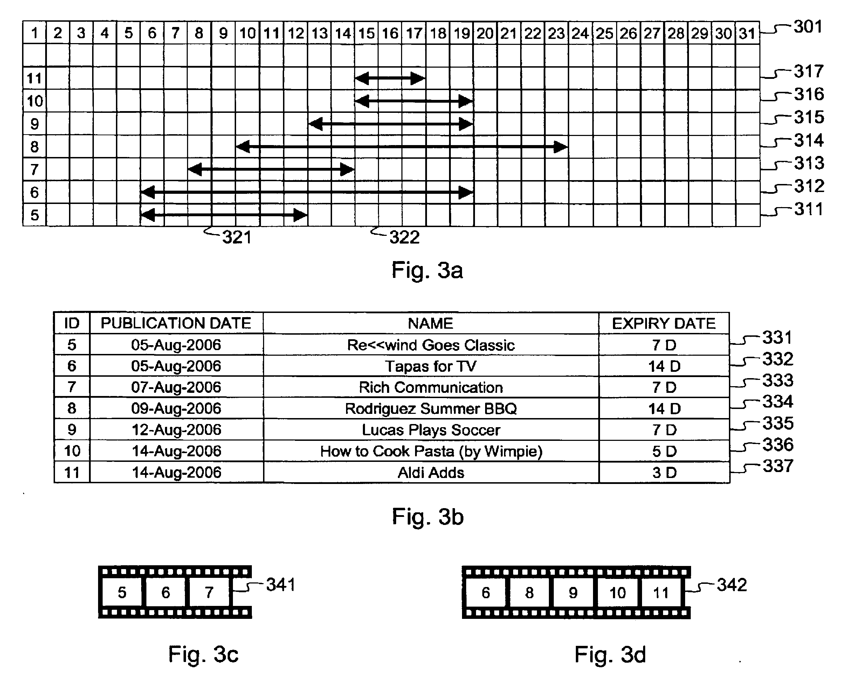

The updating of the video carrousel that is broadcasted through the broadcast community channel is illustrated by the calendar drawn in Fig. 3a. The first row 301 shows the days of the month August 2006. The bottom rows 311, 312, 313, 314, 315, 316 and 317 respectively correspond to video assets 5 till 11. The interval marked in each row with an arrowed line shows the period wherein the respective video assets are accessible to the viewers of the broadcast community channel. This interval corresponds to the time zone in between the publication date and the expiry date, including the expiry date.

Fig. 3b shows the contents of the community video store 203 in relation to the calendar of Fig. 3a. The video store 203 is assumed to maintain at least the following metadata in relation to the video assets that have the status "available in a broadcast carrousel": identification number or ID of the video asset, publication date of the video asset (might or might not correspond to the date whereon the video asset is uploaded in the community video store 203), the name or title of the video asset, and the expiry date of the video asset (might for instance be expressed as a number of days starting from the publication date). The rows 331, 332, 333, 334, 335, 336 and 337 show these metadata for the video assets 5 till 11 that also appear in the calendar of Fig. 3a. Video asset 5, a movie entitled "Re«wind Goes Classic" for instance has been uploaded and published by one of the end users - publishers on 5 August 2006. The movie expires 7 days after its publication, i.e. on 12 August 2006. Thus, the video asset 5 will appear in the carrousel on 6 August, 12:00 AM and will be removed from the carrousel on 13 August, 12:00 AM, as is indicated in Fig. 3b. Similarly, the sixth video asset corresponds to a show called "Tapas for TV". This show is published also on 5 August 2006, but its expiry date is 14 days after the publication, i.e. on 19 August 2006. Video asset 6 consequently will form part of the video carrousel delivered through the broadcast community channel between 6 August, 12:00 AM and 20 August 2006, 12:00 AM. Again, this is indicated in Fig. 3a, which also shows the time intervals wherein the seventh video asset entitled "Rich Communication", published on 7 August 2006 and expiring after 7 days, the eight video asset entitled "Rodriguez Summer BBQ", published on 9 August 2006 and expiring after 14 days, the ninth video asset entitled "Lucas Plays Soccer", published on 12 August 2006 and expiring after 7 days, the tenth video asset entitled "How to Cook Pasta (by Wimpie)", published on 14 August 2006 and expiring after 5 days, and the eleventh video asset entitled "Aldi Adds", published on 14 August 2006 and expiring after 3 days, are all indicated in Fig. 3a.

Fig. 3c shows the contents of the video carrousel as constituted by the broadcast channel generator on 9 August 2006, 12:00 AM, the time moment referred to by 321 in Fig. 3a. The carrousel 341 is composed of the video assets 5, 6 and 7 which will repetitively be broadcasted through the broadcast community channel until 10 August 2006, 12:00 AM. In a similar fashion, Fig. 3d shows the contents of the video carrousel as constituted by the broadcast channel generator on 16 August 2006, 12:00 AM, the time moment referred to by 322 in Fig. 3a. The carrousel 342 is now composed of the video assets 6, 8, 9, 10 and 11 and will be broadcasted cyclically until 17 August 2006, 12:00 AM, the time moment where the contents of the carrousel is revised.

A second possible instance of the community channel generator is a VoD (Video on Demand) channel generator. Such a VoD channel generator delivers the community channel through the VoD channel infrastructure of the IPTV system 205 in Fig. 2. The video channel generator takes all video assets that are uploaded in the community video store 203 with as status "available in an on demand carrousel" and whose expiry date has not yet lapsed, and aggregates those assets into a VoD content source for delivery through an on demand community channel. At regular time intervals, the video channel generator replaces the VoD content source with the new aggregated content source. The difference with the broadcast community channel described above is that the VoD community channel will not be broadcasted repetitively to all users. Instead, it will be delivered upon request of a user that has access rights to the community channel to that user only.

A third possible instance of the community channel generator is a VoD store which converts all the video assets that are uploaded into the community media store 203 into standalone offerings that are made available to the users linked to the community channel via a category in the IPTV system 205 that is related to the community channel whereon the video assets are published. The standalone video assets can then be requested as individual items by the viewers of the community channel. Again, the video assets may be marked with an expiry date. When a video asset becomes expired, the channel generators will be triggered, such that new content sources are calculated if needed, or such that the corresponding standalone offering in the VoD store is deleted. Within the VoD store content or channels can be searched with input of the various metadata assigned to the content or channels via the assigned tags.

As already mentioned above, access to the community channel is based on the subscription and the grants rewarded to the subscriber by the members of the community. The community channel of the system illustrated by Fig. 1 through Fig. 3d can be accessed on the IPTV client, i.e. the set-top box (STB), PC, TV or any other end-user equipment that connects with the IPTV infrastructure 205 in the network, in three different modes: the broadcast carrousel mode, the on demand carrousel mode or the VoD mode. In case of a carrousel mode, i.e. the broadcast or on demand carrousel mode, the community channel is accessed as a normal TV channel, which means a sequential play of video assets. Each video asset is watched, one after the other. When the last video asset in the carrousel is watched, the cycle restarts with the first video asset. All subscribers that tune to the broadcast community channel watch the same multicasted stream simultaneously. Trick play modes that enable fast forward or rewind functions can be supported via the recording equipment (PVR based trick play). The community channel can be added to the Electronic Program Guide with the user's subscribed channel listing and planning. Optionally, the community channel may receive special indications, differentiating it from the classic broadcast TV channels that do not contain user originating or community originating content. Subscribers that tune to the on demand community channel each receive a unicast media stream. Just like in the broadcast community channel, the video assets are cycled through. The channel can be accessed via the Electronic Program Guide (if the on demand community channel is displayed there) or via a VoD subentry. Trick play functions can be supported via recording (PVR based trick play) or may be integrated with the IPTV subsystem. In the VoD store mode, the subscribers access the community channel via a subentry wherein each subscribed community is listed. From the list of communities, the community channels can be watched like in the on-demand channel mode, or the subscriber can further navigate through the different individual video asset offerings contained in the VoD store. The selected video item will be offered through a unicast stream. Trick play functions similar to those of the on demand community channel can be offered.

Although the present invention has been illustrated by reference to specific embodiments, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example the invention is not restricted to delivery of video assets or to any particular, architectural choice that was made to ease explaining the functioning of the video delivery system illustrated by the drawings. In particular the choice of the metadata maintained in relation to the video assets, the choice of the activities that can be done by respectively owners, publishers and subscribers of the community channel, the choice of the modes supported by the video delivery system and the related states of the video assets were made only by way of example and should be interpreted as restrictions to the scope of the patent application.

## Claims

1. A packet based media delivery system (101; 201) comprising:
a. a media store for storing media assets; and
b. a channel manager for managing the delivery of packets containing said media assets through broadcast channels and/or on-demand channels to end users (104; 204),
**CHARACTERISED IN THAT** said packet based media delivery system (101; 201) further comprises:
c. a community media store (103; 203) for storing end user originating media assets; and
d. a community channel manager (102; 202) for enabling said end users (104; 204) to create a community channel having a number of linked end users, and for managing the delivery of packets containing said user originating media assets through said community channel to said linked end users.

2. A packet based media delivery system (101; 201) according to claim 1,
**CHARACTERISED IN THAT** a linked user of said community channel is registered either as an owner, a publisher or a subscriber of said community channel.

3. A packet based media delivery system (101; 201) according to claim 2,
**CHARACTERISED IN THAT** said community channel manager (102; 202) is adapted to enable an owner (104) of said community channel to create and delete said community channel, to invite, add and remove other linked users to said community channel, and to manage media assets and metadata belonging to said community channel.

4. A packet based media delivery system (101; 201) according to claim 2,
**CHARACTERISED IN THAT** said community channel manager (102; 202) is adapted to enable a publisher (204) of said community channel to upload media assets into said community channel store (103; 203) and to manage media assets originating from said publisher (204).

5. A packet based media delivery system (101; 201) according to claim 2,
**CHARACTERISED IN THAT** said community channel manager (102; 202) is adapted to enable a subscriber of said community channel to access media assets belonging to said community channel.

6. A packet based media delivery system (101; 201) according to claim 1,
**CHARACTERISED IN THAT** a media asset belonging to said community channel has one or more of the following states: a first state of availability in a broadcast carrousel, a second state of availability in an on-demand carrousel, and a third state of availability in an on-demand store.

7. A packet based media delivery system (101; 201) according to claim 6,
**CHARACTERISED IN THAT** said community channel manager (102; 202) comprises a broadcast channel generator for generating as said community channel an instance of a broadcast channel accessible to said linked end users, and for broadcasting a carrousel of media assets belonging to said community channel and having said first state through said instance of a broadcast channel.

8. A packet based media delivery system (101; 201) according to claim 7,
**CHARACTERISED IN THAT** said community channel manager (102; 202) is adapted to update said carrousel of media assets at regular time intervals.

9. A packet based media delivery system (101; 201) according to claim 6,
**CHARACTERISED IN THAT** said community channel manager comprises an on-demand channel generator for generating as said community channel an instance of an on-demand channel accessible to said linked end users, and for delivering a carrousel of media assets belonging to said community channel and having said second state through said instance of an on-demand channel upon request of a linked end user.

10. A packet based media delivery system (101; 201) according to claim 9,
**CHARACTERISED IN THAT** said community channel manager (102; 202) is adapted to update said carrousel of media assets at regular time intervals.

11. A packet based media delivery system (101; 201) according to claim 6,
**CHARACTERISED IN THAT** said community channel manager (102; 202) comprises an on-demand store generator for creating standalone offerings for respective media assets belonging to said community channel and having said third state, and for delivering a standalone offering of a media asset through an instance of an on-demand channel on request of a linked end user.

12. A packet based media delivery system (101; 201) according to claim 1,
**CHARACTERISED IN THAT** said user originating media assets comprise video assets.

13. A packet based media delivery system (101; 201) according to claim 1,
**CHARACTERISED IN THAT** said user originating media assets comprise audio assets.

14. A packet based media delivery system (101; 201) according to claim 1,
**CHARACTERISED IN THAT** said user originating media assets comprise interactive multimedia assets.

15. A packet based media delivery system (101; 201) according to claim 1,
**CHARACTERISED IN THAT** said media store and said community media store (103; 203) are integrated.

16. A community media store (103; 203) for use in a packet based media delivery system (101; 201) as defined in claim 1.

17. A community channel manager (102; 202) for use in a packet based media delivery system (101; 201) as defined in claim 1.

18. A method for packet based media delivery comprising:
a. storing media assets; and
b. delivering of packets containing said media assets through broadcast channels and/or on-demand channels to end users (104; 204),
**CHARACTERISED IN THAT** said method for packet based media delivery further comprises:
c. storing (211, 212) end user originating media assets in a community media store (203); and
d. enabling said end users (104; 204) to create (111) through a community channel manager (102; 202) a community channel having a number of linked end users, and to manage the delivery of packets containing said user originating media assets through said community channel to said linked end users.
